# EUROPÄISCHE PATENTSCHRIFT

(11) **EP 3 347 616 B1**
(45) Veröffentlichungstag und Bekanntmachung des Hinweises auf die Patenterteilung: **10.03.2021**
(21) Anmeldenummer: 16763065.6
(22) Anmeldetag: 09.09.2016
(51) Int. Cl.: F16F 9/04, F16F 9/05

(54) **LUFTFEDER MIT MEHREREN DÄMPFUNGSVORRICHTUNGEN**
AIR SPRING WITH SEVERAL DAMPING DEVICES
RESSORT PNEUMATIQUE PRÉSENTANT PLUSIEURS DISPOSITIFS D'AMORTISSEMENT

(30) Priorität: 11.09.2015 DE 102015115401
(43) Veröffentlichungstag der Anmeldung: 18.07.2018
(73) Patentinhaber: Vibracoustic CV Air Springs GmbH, 20099 Hamburg (DE)
(72) Erfinder: DEHLWES, Stephan, 22844 Norderstedt (DE); WEBER, Michael, 21244 Buchholz (DE)
(74) Vertreter: Patentanwälte Olbricht Buchhold Keulertz
(86) Internationale Anmeldenummer: PCT/EP2016/071368
(87) Internationale Veröffentlichungsnummer: WO 2017/042369

(56) Entgegenhaltungen:
- EP-A2- 1 327 539
- WO-A1-2012/054531
- DE-A1-102004 012 881
- DE-B3-102005 060 332
- JP-A- 2011 106 488
- US-A- 3 000 625
- US-A- 3 246 905
- US-A1- 2004 124 051
- US-A1- 2014 175 716

## Beschreibung

Die vorliegende Erfindung betrifft eine Luftfeder für ein Kraftfahrzeug oder eine Fahrerkabine eines Kraftfahrzeugs.

Luftfedern der eingangs genannten Art finden in einem Kraftfahrzeug oder bei einer Fahrerkabine Anwendung, um zwei zueinander bewegliche Fahrzeugteile abzufedern. Des Weiteren werden Luftfedern auch zur Veränderung oder zum konstant Halten der Niveaulage eines Kraftfahrzeugs oder einer Fahrerkabine verwendet. Herkömmliche Luftfedern weisen einen Luftfederbalg aus Gummi auf, der mit einem zumeist als Deckel ausgebildeten oberen Abschlusselement und einem Abrollkolben verbunden ist, um einen luftdicht abgeschlossenen Arbeitsraum zu bilden. Der Arbeitsraum ist mit einem Fluid, insbesondere Druckluft, als Arbeitsmedium befüllt. Bei einer Ein- und Ausfederung rollt der Luftfederbalg an der Außenfläche des Abrollkolbens ab und federt so die eingeleiteten Schwingungen ab. Durch Befüllen des Arbeitsraums mit Druckluft oder durch Ablassen von Druckluft aus dem Arbeitsraum kann die Niveaulage verändert oder konstant gehalten werden.

Neben der zuvor beschriebenen Federungsfunktion ist es auch möglich, eine Luftfeder derart auszubilden, dass diese zusätzlich eine Dämpfungsfunktion aufweist. Eine derartige Luftfeder kann auch als Luftfederdämpfer bezeichnet werden. Die Dämpfung erfolgt zumeist dadurch, dass das Arbeitsmedium zwischen dem Arbeitsraum und einer weiteren Kammer über einen Dämpfungskanal hin und her strömt. Aufgrund des verengten Querschnitts des Dämpfungskanals und der damit verbundenen Reibung werden die eingeleiteten Schwingungen bedämpft. Durch Variation des Dämpfungskanalquerschnitts lassen sich unterschiedliche Dämpfungscharakteristiken einstellen.

Aus DE 10 2005 060 332 B3 geht ein Luftfederbein mit einer Luftfeder hervor, die ein Abrollrohr, eine Abschlussplatte und einen das Abrollrohr und die Abschlussplatte unter Ausbildung eines Federraums verbindenden Rollbalg aufweist. Innerhalb des Abrollrohrs ist ein Schwingungsdämpfer angeordnet, der über eine kardanische Lagerung mit dem Abrollrohr verbunden ist. Zwischen der kardanischen Lagerung und dem Abrollrohr ist ein Durchgang mit verengtem Querschnitt ausgebildet, der den Federraum mit einer in dem Abrollkolben ausgebildeten Kammer verbindet.

Aus EP 1 327 539 A2 geht ein Luftfederbein hervor, das aus einem auf einem Abrollmantel abrollbaren, einen Gasraum einschließenden Rollbalg, einen innerhalb des Rollbalgs und/oder des Abrollmantels angeordneten hydraulischen Schwingungsdämpfer und einen den Gasraum abschließenden Tragzylinder aufweist. Innerhalb des Tragzylinders ist ein zweiter Gasraum ausgebildet, der mit dem ersten Gasraum verbindbar ist, wobei die Verbindung zwischen dem ersten Gasraum und dem weiteren Gasraum über ein Ventil ganz oder teilweise verschließbar ist.

Darüber hinaus geht aus US 2014/0175716 A1 ein Federbein hervor, das eine Luftfeder und einen Schwingungsdämpfer aufweist. Die Luftfeder ist aus einem als Abrollkolben dienenden Befestigungsbehälter, einen als Deckel ausgebildeten zweiten Befestigungsbehälter und einen die beiden Behälter miteinander verbindenden Rollbalg gebildet, der eine mit Luft gefüllte erste Kammer bildet. Innerhalb des ersten Befestigungsbehälters ist der Schwingungsdämpfer eingesetzt, wobei sich eine Kolbenstange des Schwingungsdämpfers über eine in dem Befestigungsbehälter eingebrachte erste Öffnung in die Kammer hinein erstreckt. Über die erste Öffnung kann Luft von der ersten Kammer in eine von einer Kolbenstangenführung und dem Befestigungsbehälter gebildete zweite Kammer strömen. Die Kolbenstangenführung ist mit zweiten Öffnungen versehen, über die Luft von der ersten Kammer und der zweiten Kammer in Luftkammern des Schwingungsdämpfers strömen kann.

Ferner gehen aus US 3,246,905 A, JP 2011 106 488 A, DE 10 2004 012 881 A1 und US 3,000,625 A Luftfederbeine hervor, umfassend eine Luftfeder und einen hydraulischen Schwingungsdämpfer.

Ferner geht aus WO 2012/054531 A1 eine Luftfeder mit einem Deckel, einem Abrollkolben und einem Luftfederbalg hervor. Die Luftfeder weist eine Dämpfungsvorrichtung auf, die aus einer im Volumen veränderlichen Kammer des Luftbalgs, einer innerhalb des Abrollkolbens ausgebildeten und im Volumen konstant bleibenden Kolbenkammer und einem die beiden Kammern miteinander verbindenden Dämpfungskanal gebildet ist. Innerhalb der Luftfeder ist eine Gasdruckdämpferbaugruppe vorgesehen, die ein erstes Dämpferelement mit einer ersten Dämpfungskammer, ein zweites Dämpferelement mit einer zweiten Dämpfungskammer, deren Endwand von einem verschiebbaren zweiten Elementkolben gebildet ist, und ein drittes Dämpferelement mit einer Dämpferstange und einem verschiebbaren dritten Elementkolben aufweist. Die erste Dämpfungskammer und die zweite Dämpfungskammer sind über eine Öffnung in dem zweiten Elementkolben miteinander verbunden, wobei die erste Dämpfungskammer und die Kolbenkammer über eine zweite Öffnung miteinander verbunden sind.

Der vorliegenden Erfindung liegt die **Aufgabe** zugrunde, eine Luftfeder zu schaffen, die eine erhöhte Dämpfung und einen geringeren Bauraumbedarf aufweist und zudem kostengünstig in der Herstellung ist.

Zur **Lösung** der Aufgabe wird eine Luftfeder mit den Merkmalen des Anspruchs 1 vorgeschlagen.

Bevorzugte Ausgestaltungen der Luftfeder sind Gegenstand der abhängigen Ansprüche.

Die Luftfeder für ein Kraftfahrzeug oder eine Fahrerkabine eines Kraftfahrzeugs weist einen Deckel, einen Abrollkolben und wenigstens einen Luftfederbalg auf, wobei mindestens zwei Dämpfungsvorrichtungen in der Luftfeder integriert sind, die als Arbeitsmedium Druckluft, Gas oder ein kompressibles Medium verwenden, wobei eine erste Dämpfungsvorrichtung eine im Volumen veränderliche erste Kammer, eine im Volumen konstant bleibende zweite Kammer und eine die beiden Kammern miteinander verbindende erste Dämpfungskanaleinrichtung aufweist, wobei der Abrollkolben mehrteilig ausgebildet ist, wobei der Abrollkolben ein Unterteil, ein eine Abrollkontur aufweisendes Oberteil und ein Deckelelement aufweist, und wobei das Deckelelement derart mit dem Unterteil und dem Oberteil verbindbar ist, dass alle Teile gegeneinander fixiert sind, wobei die beiden Dämpfungseinrichtungen parallel geschaltet sind, wobei eine zweite Dämpfungsvorrichtung eine im Volumen veränderliche dritte Kammer, eine im Volumen veränderliche vierte Kammer und eine die beiden Kammern miteinander verbindende zweite Dämpfungskanaleinrichtung aufweist, und wobei die erste Kammer und die dritte Kammer miteinander verbunden sind, um einen Austausch von Druckluft, Gas oder einem kompressiblen Medium zu ermöglichen.

Durch die Integration zweier Dämpfungsvorrichtungen in der Luftfeder wird die Dämpfung und damit einhergehend der Dämpfungseffekt erhöht. Durch die mindestens zwei in die Luftfeder integrierten Dämpfungsvorrichtungen weist die Luftfeder eine kompakte Bauweise auf, so dass der benötigte Bauraum der Luftfeder reduziert ist. Zudem kann auf eine Außenführung für den Luftfederbalg verzichtet werden, was die Montage der Luftfeder vereinfacht und somit deren Herstellung kostengünstig macht.

Die Dämpfungsvorrichtungen können als Arbeitsmedium Druckluft oder ein Gas verwenden. Ferner können die Dämpfungsvorrichtungen als Arbeitsmedium auch ein kompressibles Medium verwenden. Wird Luft oder Druckluft verwendet, so können die Dämpfungsvorrichtungen auch als Luftfederdämpfer bezeichnet werden.

Da beide Dämpfungseinrichtungen parallel geschaltet sind, kann die Dämpfung vergrößert werden, da bei einer Ein- oder Ausfederung beide Dämpfungsvorrichtungen aktiv sind. Zudem lassen sich durch die Parallelschaltung der beiden Dämpfungsvorrichtungen zwei voneinander unabhängige Dämpfungen erzeugen.

Die im Volumen veränderliche erste Kammer kann als aktives Volumen und die im Volumen konstant bleibende zweite Kammer kann als passives Volumen bezeichnet werden. Beim Ein- und Ausfedern verändert sich das Volumen der veränderlichen Kammer, wodurch ein Überdruck oder Unterdruck erzeugt wird, so dass die in den Kammern befindliche Druckluft oder das in den Kammern befindliche Gas oder kompressible Medium über die Dämpfungskanaleinrichtung hin und her strömt und so eine Dämpfung erzeugt. Durch Variation des Durchmessers der Dämpfungskanaleinrichtung ist es möglich, die Dämpfungsvorrichtung auf unterschiedliche Schwingungsfrequenzen abzustimmen. Weiterhin vorteilhaft kann die erste Dämpfungskanaleinrichtung einen Dämpfungskanal oder mehrere Dämpfungskanäle aufweisen, die die erste Kammer und die zweite Kammer miteinander verbinden. Darüber hinaus kann der Querschnitt der Dämpfungskanaleinrichtung mittels eines Ventils freigebbar und/oder verschließbar sein. Dadurch kann die Dämpfungsfunktion ein- und ausgeschaltet oder die Dämpfungscharakteristik verändert werden.

In einer vorteilhaften Ausgestaltung ist die erste Kammer von dem Deckel, dem Abrollkolben und dem Luftfederbalg begrenzt und die zweite Kammer ist von dem Abrollkolben begrenzt, wobei die erste Dämpfungskanaleinrichtung in dem Abrollkolben eingebracht ist. Bei einer Einfederung verringert sich das Volumen der ersten Kammer, so dass die in der ersten Kammer befindliche Druckluft oder das in den Kammern befindliche Gas oder kompressible Medium über die erste Dämpfungskanaleinrichtung in die im Abrollkolben ausgebildete zweite Kammer strömt. Während des Ausfederns vergrößert sich das Volumen der ersten Kammer, so dass ein Unterdruck erzeugt wird, der zur Folge hat, dass die in der zweiten Kammer befindliche Druckluft oder das in den Kammern befindliche Gas oder kompressible Medium über die erste Dämpfungskanaleinrichtung wieder in die erste Kammer strömt. Infolge dieses Hin- und Herströmens erfolgt eine Dämpfung. Die erste Dämpfungskanaleinrichtung kann aus einem in den Abrollkolben eingebrachten Dämpfungskanal und/oder mehrere in den Abrollkolben eingebrachte Dämpfungskanäle gebildet sein.

Vorteilhaft ist die zweite Kammer von einer Außenwandung und einer Innenwandung des Abrollkolbens begrenzt. Dadurch verändert sich während einer Ein- und Ausfederung der Luftfeder das Volumen der zweiten Kammer nicht und bleibt somit stets konstant. Die in dem Abrollkolben integrierte zweite Kammer stellt vorteilhaft ein Zusatzvolumen dar.

Da das Volumen der dritten und vierten Kammer veränderlich ist, können diese beiden Kammern auch als aktives Volumen bezeichnet werden. Vorteilhaft wird während einer Einfederung die vierte Kammer komprimiert und die dritte Kammer vergrößert, wobei die Druckluft, das Gas oder das kompressible Medium über die zweite Dämpfungskanaleinrichtung von der vierten Kammer in die dritte Kammer strömt. Vorteilhaft wird während einer Ausfederung das Volumen der dritten Kammer reduziert und das Volumen der vierten Kammer vergrößert, wobei die Druckluft, das Gas oder das kompressible Medium über die zweite Dämpfungskanaleinrichtung von der dritten Kammer in die vierte Kammer strömt. Durch das Hin- und Herströmen der Druckluft, das Gas oder das kompressible Medium über die zweite Dämpfungskanaleinrichtung wird ein Dämpfungseffekt erzielt. Durch Variation des Durchmessers der zweiten Dämpfungskanaleinrichtung ist es möglich, die Dämpfungsvorrichtung auf unterschiedliche Schwingungsfrequenzen abzustimmen. Weiterhin vorteilhaft kann die zweite Dämpfungskanaleinrichtung einen Dämpfungskanal oder mehrere Dämpfungskanäle aufweisen, die die dritte Kammer und die vierte Kammer miteinander verbinden. Darüber hinaus kann der Querschnitt der zweiten Dämpfungskanaleinrichtung mittels eines Ventils freigebbar und verschließbar sein. Dadurch kann die Dämpfungsfunktion ein- und ausgeschaltet oder die Dämpfungscharakteristik verändert werden.

Bevorzugt sind die Kammern als Luftkammern, insbesondere als Druckluftkammern ausgebildet. Ferner können die Kammern auch mit einem Gas oder einem kompressiblen Medium befüllt sein.

Die dritte Kammer und die vierte Kammer können von einem in dem Abrollkolben ausgebildeten zylindrischen Gehäuse begrenzt sein. Vorteilhaft ist das zylindrische Gehäuse durch eine Innenwandung des Abrollkolbens gebildet. Weiterhin vorteilhaft ist das zylindrische Gehäuse von der zweiten Kammer umgeben.

Vorteilhaft sind die dritte Kammer und die vierte Kammer durch einen beweglichen Kolben voneinander getrennt. Durch eine Bewegung des Kolbens während einer Ein- und Ausfederung werden die Volumen der dritten und vierten Kammer abwechselnd reduziert und vergrößert, wobei die Druckluft, das Gas oder das kompressible Medium über die zweite Dämpfungskanaleinrichtung hin- und herströmt.

Vorteilhaft ist die zweite Dämpfungskanaleinrichtung zwischen dem Kolben und dem zylindrischen Gehäuse gebildet und/oder die zweite Dämpfungskanaleinrichtung ist in dem Kolben eingebracht. Die zweite Dämpfungskanaleinrichtung kann als ein in den Kolben eingebrachter Dämpfungskanal ausgebildet sein, der die dritte Kammer und die vierte Kammer miteinander verbindet. Ferner kann die zweite Dämpfungskanaleinrichtung durch einen Spalt gebildet sein, der zwischen dem Kolben und der Innenseite des zylindrischen Gehäuses gebildet ist. Hierzu kann der Kolben von einer Innenseite des zylindrischen Gehäuses beabstandet sein. Ferner kann die zweite Dämpfungskanaleinrichtung mehrere Dämpfungskanäle aufweisen. So kann ein Dämpfungskanal in dem Kolben eingebracht sein und ein weiterer Dämpfungskanal kann durch einen Spalt gebildet sein, der zwischen dem Kolben und der Innenseite des zylindrischen Gehäuses gebildet ist. Vorteilhaft ist der Kolben innerhalb des zylindrischen Gehäuses geführt.

Vorteilhaft ist der Kolben mit einer Kolbenstange verbunden, wobei die Kolbenstange an dem Deckel befestigt ist. Über die Kolbenstange wird der Kolben innerhalb des Gehäuses während einer Ein- und Ausfederung hin und her bewegt.

In einer vorteilhaften Ausgestaltung weist der Kolben einen ersten Puffer auf, der eine Bewegung des Kolbens begrenzt. Bevorzugt wirkt der erste Puffer mit dem Gehäuse, insbesondere dessen Deckelelement, zusammen. Der erste Puffer kann auf einer dem Deckelelement zugewandten Oberfläche des Kolbens angeordnet sein. Vorteilhaft ist der erste Puffer mit einem Durchgang versehen, durch den sich die Kolbenstange hindurch erstrecken kann. Vorteilhaft ist der erste Puffer aus einem elastomeren Material. Alternativ kann der Puffer auf einer der vierten Kammer zugewandten Unterseite des Kolbens oder innerhalb der vierten Kammer angeordnet sein. Weiterhin vorteilhaft ist der erste Puffer weich ausgebildet, um eine weiche Kennlinie während eines Anschlagens zu erhalten. Der erste Puffer kann stoffschlüssig mit dem Kolben verbunden sein.

Da der Abrollkolben mehrteilig ist kann der Kolben einfach in das Gehäuse eingesetzt werden.

Bevorzugt sind in dem Unterteil die zweite Kammer und das die dritte und die vierte Kammer begrenzende Gehäuse ausgebildet. Vorteilhaft ist das Deckelelement kraft- und/oder formschlüssig mit dem Unterteil verbunden. Hierzu kann das Deckelelement mit einem Außengewinde versehen sein, das in ein am Unterteil ausgebildetes Innengewinde einschraubbar ist. Vorteilhaft ist das Deckelelement in das Gehäuse einschraubbar. Vorteilhaft ist das Deckelelement mit einem Durchgang versehen, durch welchen sich die Kolbenstange erstrecken kann. Vorteilhaft verbindet der Durchgang die erste Kammer und die dritte Kammer. Weiterhin vorteilhaft ist die erste Dämpfungskanaleinrichtung in das Oberteil eingebracht. Für den Zusammenbau des Abrollkolbens kann das Oberteil auf das Unterteil aufgesetzt werden, wobei zwischen dem Oberteil und dem Unterteil ein Dichtungselement, insbesondere ein O-Ring, zur Abdichtung angeordnet werden kann. Anschließend kann das Deckelelement mit dem Unterteil verbunden werden, insbesondere in das Unterteil, vorzugsweise in das am zylindrischen Gehäuse ausgebildete Innengewinde, eingeschraubt werden. Dabei verspannt das Deckelelement das Oberteil gegen das Unterteil und fixiert so alle Teile gegeneinander. Vorteilhaft weist das Deckelelement einen umlaufenden Vorsprung auf, der in einen am Oberteil ausgebildeten Rücksprung eingreifen kann, um so das Oberteil gegen das Unterteil zu verspannen und zu fixieren.

In einer vorteilhaften Ausgestaltung ist der Abrollkolben aus Kunststoff, insbesondere einem faserverstärkten Kunststoff, hergestellt.

Vorteilhaft weist der Deckel einen zweiten Puffer auf, der eine Bewegung des Deckels und/oder des Abrollkolbens begrenzt. Vorteilhaft ist der zweite Puffer auf einer der ersten Kammer zugewandten Seite des Deckels angeordnet. Weiterhin vorteilhaft weist der zweite Puffer einen Durchgang auf, durch welchen sich die Kolbenstange erstrecken kann. Der zweite Puffer begrenzt während einer Ein- und Ausfederung eine Bewegung von Deckel und/oder Abrollkolben. Vorteilhaft ist der zweite Puffer aus einem elastomeren Material. Weiterhin vorteilhaft ist der erste Puffer weich ausgebildet, um eine weiche Kennlinie während eines Anschlagens zu erhalten. Der zweite Puffer kann stoffschlüssig mit dem Deckel verbunden sein.

Der Abrollkolben kann eine Anschlusseinrichtung zum Anschließen einer Druckluftquelle aufweisen. Ferner kann die Anschlusseinrichtung an eine Gasquelle oder eine Quelle mit einem kompressiblen Medium angeschlossen sein. Über die Anschlusseinrichtung kann die Luftfeder mit Druckluft, Gas oder einem kompressiblen Medium befüllt beziehungsweise kann Druckluft, Gas oder ein kompressibles Medium abgelassen werden. Dadurch kann ein gewünschtes Niveau der Fahrerkabine oder des Kraftfahrzeugs bei unterschiedlicher Beladung oder Gewichtsbelastung konstant gehalten oder eingestellt werden.

Nachfolgend wird die Luftfeder anhand eines Ausführungsbeispiels näher erläutert, das in der beigefügten schematischen Zeichnung dargestellt ist. Hierbei zeigt:

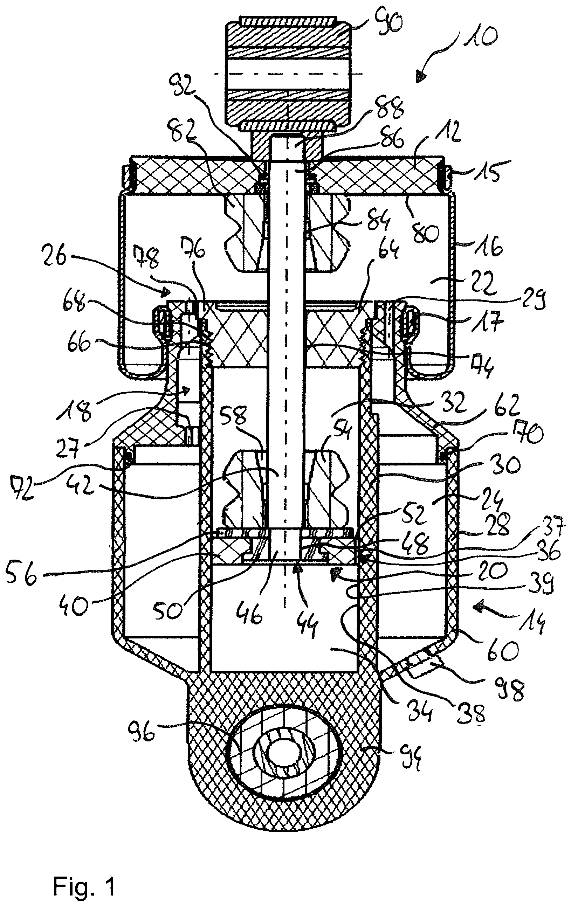

- Fig. 1: einen Längsschnitt durch eine Luftfeder.

In Fig. 1 ist eine Luftfeder 10 gezeigt, die zur Lagerung und Dämpfung einer nicht dargestellten Fahrerkabine oder eines nicht dargestellten Kraftfahrzeugs dient.

Die Luftfeder 10 weist einen Deckel 12, einen Abrollkolben 14 und einen den Deckel 12 und den Abrollkolben 14 miteinander verbindenden Luftfederbalg 16 auf, wobei der Luftfederbalg 16 mittels eines ersten Klemmrings 15 an dem Deckel 12 und mittels eines zweiten Klemmrings 17 an dem Abrollkolben 14 luftdicht befestigt ist. In die Luftfeder 10 sind ferner eine erste Dämpfungsvorrichtung 18 und eine zweite Dämpfungsvorrichtung 20 integriert, wobei die beiden Dämpfungsvorrichtungen 18, 20 parallel zueinander geschaltet sind.

Die erste Dämpfungsvorrichtung 18 weist eine im Volumen veränderliche erste Kammer 22, eine im Volumen konstant bleibende zweite Kammer 24 und eine die beiden Kammern 22, 24 miteinander verbindende erste Dämpfungskanaleinrichtung 26 auf. Die erste Dämpfungskanaleinrichtung 26 umfasst einen ersten Dämpfungskanal 27 und einen zweiten Dämpfungskanal 29, die die erste Kammer 22 und die zweite Kammer 24 miteinander verbinden. Die erste Kammer 22 ist durch den Deckel 12, den Abrollkolben 14 und den Luftfederbalg 16 begrenzt. Die zweite Kammer 24 ist als Zusatzvolumen in dem Abrollkolben 14 integriert und ist von einer Außenwandung 28 und einer Innenwandung 30 des Abrollkolbens 14 begrenzt. Der erste Dämpfungskanal 27 und der zweite Dämpfungskanal 29, die die beiden Kammern 22, 24 miteinander verbinden, sind in dem Abrollkolben 14 eingebracht.

Die zweite Dämpfungsvorrichtung 20 weist eine im Volumen veränderliche dritte Kammer 32, eine im Volumen veränderliche vierte Kammer 34 und eine die beiden Kammern 32,34 miteinander verbindende zweite Dämpfungskanaleinrichtung 36 auf. Die beiden Kammern 32, 34 sind von einem zylindrischen Gehäuse 38 begrenzt, welches durch die Innenwandung 30 gebildet ist. Innerhalb des zylindrischen Gehäuses 38 ist ein beweglicher Kolben 40 angeordnet, der die beiden Kammern 32, 34 voneinander trennt. Die zweite Dämpfungskanaleinrichtung 36 weist einen dritten Dämpfungskanal 37 auf. Der dritte Dämpfungskanal 37 ist durch einen zwischen dem Kolben 40 und einer Innenseite 39 des zylindrischen Gehäuses 38 gebildeten Spalt gebildet. Der Kolben 40 ist innerhalb des zylindrischen Gehäuses 38 geführt.

Der Kolben 40 ist mit einer Kolbenstange 42 verbunden, die endseitig mit dem Deckel 12 verbunden ist. Die Kolbenstange 42 ist an ihrem ersten Ende 44 mit dem Kolben 42 verbunden. Hierzu weist die Kolbenstange 42 einen ersten Gewindeabschnitt 46 auf, der in einen ersten Durchgang 48 des Kolbens 42 eingeführt ist. Zum Fixieren der Kolbenstange 42 an dem Kolben 40 wird dann von unten eine Mutter 50 auf den ersten Gewindeabschnitt 46 aufgeschraubt.

Auf einer Oberseite 52 des Kolbens 40 ist ein erster Puffer 54 angeordnet, der bevorzugt aus einem elastomeren Material ist. Der erste Puffer 54 ist auf einer Platte 56 angeordnet, insbesondere stoffschlüssig mit dieser verbunden, wobei die Platte 56 auf der Oberseite 52 des Kolbens 40 aufliegt und über die Kolbenstange 42 und die Mutter 50 an dem Kolben 40 fixiert ist. Der erste Puffer 54 ist zudem mit einem zweiten Durchgang 58 versehen, durch welchen sich die Kolbenstange 42 erstreckt.

Der Abrollkolben 14 ist mehrteilig ausgebildet und weist ein Unterteil 60, ein eine Abrollkontur aufweisendes Oberteil 62 und ein Deckelelement 64 auf. In dem Unterteil 60 ist die zweite Kammer 24 und das die dritte Kammer 32 und die vierte Kammer 34 begrenzende zylindrische Gehäuse 38 ausgebildet. An dem Oberteil 62 ist der Luftfederbalg 16 über den zweiten Klemmring 17 befestigt. Bei einer Einfederung rollt der Luftfederbalg 16 an der Außenkontur beziehungsweise die eine Abrollkontur bildende Außenkontur des Oberteils 62 ab. Über das Deckelelement 64 werden das Unterteil 60 und das Oberteil 62 miteinander verbunden. Hierzu weist das Deckelelement 64 ein Außengewinde 66 auf, das in ein Innengewinde 68 des zylindrischen Gehäuses 38 einschraubbar ist. Zum Zusammenbau des Abrollkolbens 14 wird das Oberteil 62 auf das Unterteil 60 aufgesetzt, wobei zwischen dem Oberteil 62 und dem Unterteil 60 ein erstes Dichtelement 70, insbesondere ein O-Ring, eingesetzt wird. Hierzu weist das Oberteil 62 eine umlaufende Umrandung 72 mit einer Nut auf, in die das erste Dichtelement 70 einsetzbar ist. Anschließend wird der Kolben 40 samt daran befestigter Kolbenstange 42 und erstem Puffer 54 in das zylindrische Gehäuse 38 eingesetzt und mittels des Deckelelementes 64 verschlossen. Das Deckelelement 64 weist dazu einen dritten Durchgang 74 auf, durch welche sich die Kolbenstange 42 hindurch erstrecken kann, wenn das Deckelelement 64 auf die Kolbenstange 42 aufgeschoben und schließlich in das Innengewinde 68 eingeschraubt wird. Über den Durchgang 74 können die erste Kammer 28 und die dritte Kammer 38 miteinander in Verbindung stehen. Das Deckelelement 64 weist einen umlaufenden Vorsprung 76 auf, der in ein am Oberteil 62 ausgebildeten Rücksprung 78 eingreift und so das Oberteil 62 gegen das Unterteil 60 verspannt und fixiert.

An einer Unterseite 80 des Deckels 12 ist ein zweiter Puffer 82 angeordnet, insbesondere ist der zweite Puffer 82 stoffschlüssig mit der Unterseite 80 des Deckels 12 verbunden. Der zweite Puffer 82 ist aus einem elastomeren Material und weist einen vierten Durchgang 84 auf, durch welche sich die Kolbenstange 42 hindurch erstreckt. Die Kolbenstange 42 erstreckt sich zudem durch den Deckel 12 und weist an seinem zweiten Ende 86 einen zweiten Gewindeabschnitt 88 auf, auf welchen ein erstes Elastomerlager 90 aufgeschraubt ist. Das erste Elastomerlager 90 fixiert die Kolbenstange 42 an dem Deckel 12. Zur Abdichtung der ersten Kammer 22 gegenüber der Umgebung ist zwischen dem Deckel 12 und der Kolbenstange 42 ein zweites Dichtelement 92, insbesondere ein O-Ring, angeordnet. Der Abrollkolben 14, insbesondere das Unterteil 60, weist zudem einen Aufnahmeabschnitt 94 auf, in den ein zweites Elastomerlager 96 eingebracht, insbesondere eingepresst, ist.

Der Abrollkolben 14, insbesondere im Bereich der zweiten Kammer 24, ist mit einer Anschlusseinrichtung 98 versehen, die mit einer nicht dargestellten Druckluftquelle, einer nicht dargestellten Gasquelle oder einer nicht dargestellten Quelle mit einem kompressiblen Medium verbindbar ist. Über die Anschlusseinrichtung 98 kann die Luftfeder 10 mit Druckluft, Gas oder einem kompressiblen Medium befüllt, beziehungsweise kann Druckluft, Gas oder kompressible Medium abgelassen werden. Dadurch ist es möglich, ein gewünschtes Niveau einer Fahrerkabine oder eines Kraftfahrzeugs bei unterschiedlicher Beladung oder Gewichtsbelastung konstant zu halten oder einzustellen.

Nachfolgend wird die Dämpfung der Luftfeder 10 bei einer Ein- und Ausfederung beschrieben. Während der Einfederung rollt der Luftfederbalg 16 an dem Oberteil 62 ab, so dass die erste Kammer 22 komprimiert wird. Dadurch strömt die in der ersten Kammer 22 befindliche Druckluft oder das in der ersten Kammer 22 befindliche Gas oder kompressible Medium über den ersten Dämpfungskanal 27 und den zweiten Dämpfungskanal 29 in die zweite Kammer 24 und erzeugt so einen ersten Dämpfungseffekt. Gleichzeitig wird bei einer Einfederung der Kolben 40 über die Kolbenstange 42 nach unten bewegt, so dass sich das Volumen der dritten Kammer 32 vergrößert und gleichzeitig das Volumen der vierten Kammer 34 verringert. Dadurch strömt die Druckluft, das Gas oder das kompressible Medium aus der vierten Kammer 34 über den dritten Dämpfungskanal 37 in die dritte Kammer 32 und erzeugt so einen zu dem ersten Dämpfungseffekt parallelen zweiten Dämpfungseffekt. Die Einfederung wird durch ein Anschlagen des zweiten Puffers 82 an dem Deckelelement 64 begrenzt. Bei einer Ausfederung wird die erste Kammer 22 vergrößert, so dass durch den in der ersten Kammer 22 erzeugten Unterdruck die in der zweiten Kammer 24 befindliche Druckluft oder das in der ersten Kammer 22 befindliche Gas oder kompressible Medium über den ersten Dämpfungskanal 27 und den zweiten Dämpfungskanal 29 in die erste Kammer 22 strömt und so einen ersten Dämpfungseffekt erzielt. Gleichzeitig wird der Kolben 40 bei einer Ausfederung nach oben verschoben, so dass die dritte Kammer 32 komprimiert und die vierte Kammer 34 vergrößert wird, wobei Druckluft, Gas oder kompressibles Medium von der dritten Kammer 32 über den dritten Dämpfungskanal 37 in die vierte Kammer 34 strömt und so einen zu dem ersten Dämpfungseffekt parallelen zweiten Dämpfungseffekt bewirkt. Die Ausfederung wird durch ein Anschlagen des ersten Puffers 54 an dem Deckelelement 64 begrenzt.

Die Luftfeder 10 zeichnet sich durch die Integration zweier parallel geschalteter Dämpfungsvorrichtungen 18, 20 aus. Dadurch kann die Dämpfung vergrößert und gleichzeitig der für die Luftfeder 10 benötigte Bauraum reduziert werden. Des Weiteren kann eine Außenführung für den Luftfederbalg 16 entfallen, so dass die Montage vereinfacht und gleichzeitig die Luftfeder 10 kostengünstig hergestellt werden kann.

### Bezugszeichenliste

- 10: Luftfeder
- 12: Deckel
- 14: Abrollkolben
- 15: erster Klemmring
- 16: Luftfederbalg
- 17: zweiter Klemmring
- 18: erste Dämpfungsvorrichtung
- 20: zweite Dämpfungsvorrichtung
- 22: erste Kammer
- 24: zweite Kammer
- 26: erste Dämpfungskanaleinrichtung
- 27: erster Dämpfungskanal
- 28: Außenwandung
- 29: zweiter Dämpfungskanal
- 30: Innenwandung
- 32: dritte Kammer
- 34: vierte Kammer
- 36: zweite Dämpfungskanaleinrichtung
- 37: dritter Dämpfungskanal
- 38: zylindrisches Gehäuse
- 39: Innenseite
- 40: Kolben
- 42: Kolbenstange
- 44: erste Ende
- 46: erster Gewindeabschnitt
- 48: erster Durchgang
- 50: Mutter
- 52: Oberseite
- 54: erster Puffer
- 56: Platte
- 58: zweiter Durchgang
- 60: Unterteil
- 62: Oberteil
- 64: Deckelelement
- 66: Außengewinde
- 68: Innengewinde
- 70: erstes Dichtelement
- 72: Umrandung
- 74: dritter Durchgang
- 76: Vorsprung
- 78: Rücksprung
- 80: Unterseite
- 82: zweiter Puffer
- 84: vierter Durchgang
- 86: zweites Ende
- 88: zweiter Gewindeabschnitt
- 90: erstes Elastomerlager
- 92: Dichtelement
- 94: Aufnahmeabschnitt
- 96: zweites Elastomerlager
- 98: Anschlusseinrichtung

## Patentansprüche

1. Luftfeder (10) für ein Kraftfahrzeug oder eine Fahrerkabine eines Kraftfahrzeugs mit einem Deckel (12), einem Abrollkolben (14) und wenigstens einem Luftfederbalg (16), wobei mindestens zwei Dämpfungsvorrichtungen (18, 20) in der Luftfeder (10) integriert sind, die als Arbeitsmedium Druckluft, Gas oder ein kompressibles Medium verwenden, wobei eine erste Dämpfungsvorrichtung (18) eine im Volumen veränderliche erste Kammer (22), eine im Volumen konstant bleibende zweite Kammer (24) und eine die beiden Kammern (22, 24) miteinander verbindende erste Dämpfungskanaleinrichtung (26) aufweist, wobei der Abrollkolben (14) mehrteilig ausgebildet ist, wobei der Abrollkolben (14) ein Unterteil (60), ein eine Abrollkontur aufweisendes Oberteil (62) und ein Deckelelement (64) umfasst, wobei das Deckelelement (64) derart mit dem Unterteil (60) und dem Oberteil (54) verbindbar ist, dass alle Teile gegeneinander fixiert sind, **dadurch gekennzeichnet, dass** die beiden Dämpfungsvorrichtungen (18, 20) parallel geschaltet sind, dass eine zweite Dämpfungsvorrichtung (20) eine im Volumen veränderliche dritte Kammer (32), eine im Volumen veränderliche vierte Kammer (34) und eine die beiden Kammern (32, 34) miteinander verbindende zweite Dämpfungskanaleinrichtung (36) aufweist, und wobei die erste Kammer (22) und die dritte Kammer (32) miteinander verbunden sind, um einen Austausch von Druckluft, Gas oder einem kompressiblen Medium zu ermöglichen.

2. Luftfeder nach Anspruch 1, **dadurch gekennzeichnet, dass** die erste Kammer (22) von dem Deckel (12), dem Abrollkolben (14) und dem Luftfederbalg (16) begrenzt ist und dass die zweite Kammer (24) von dem Abrollkolben (14) begrenzt ist, wobei die erste Dämpfungskanaleinrichtung (26) in dem Abrollkolben (14) eingebracht ist.

3. Luftfeder nach Anspruch 2, **dadurch gekennzeichnet, dass** die zweite Kammer (24) von einer Außenwandung (28) und einer Innenwandung (30) des Abrollkolbens (14) begrenzt ist.

4. Luftfeder nach einem der vorhergehenden Ansprüche, **dadurch gekennzeichnet, dass** die dritte Kammer (32) und die vierte Kammer (34) von einem in dem Abrollkolben (14) ausgebildeten zylindrischen Gehäuse (38) begrenzt sind.

5. Luftfeder nach einem der vorhergehenden Ansprüche, **dadurch gekennzeichnet, dass** die dritte Kammer (32) und die vierte Kammer (34) durch einen beweglichen Kolben (40) voneinander getrennt sind.

6. Luftfeder nach Anspruch 4 oder 5, **dadurch gekennzeichnet, dass** die zweite Dämpfungskanaleinrichtung (36) zwischen dem Kolben (40) und dem zylindrischen Gehäuse (38) gebildet ist und/oder dass die zweite Dämpfungskanaleinrichtung (36) in dem Kolben (40) eingebracht ist.

7. Luftfeder nach Anspruch 5 oder 6, **dadurch gekennzeichnet, dass** der Kolben (40) mit einer Kolbenstange (42) verbunden ist, wobei die Kolbenstange (42) an dem Deckel (12) befestigt ist.

8. Luftfeder nach einem der Ansprüche 5 bis 7, **dadurch gekennzeichnet, dass** der Kolben (40) einen ersten Puffer (54) aufweist, der eine Bewegung des Kolbens (40) begrenzt.

9. Luftfeder nach einem der vorhergehenden Ansprüche, **dadurch gekennzeichnet, dass** der Deckel (12) einen zweiten Puffer (82) aufweist, der eine Bewegung des Deckels (12) und/oder des Abrollkolbens (14) begrenzt.

10. Luftfeder nach einem der vorhergehenden Ansprüche, **dadurch gekennzeichnet, dass** der Abrollkolben (14) eine Anschlusseinrichtung (98) zum Anschließen einer Druckluftquelle aufweist.

## Claims

1. Air spring (10) for a motor vehicle or a driver's cabin of a motor vehicle, having a cover (12), a rolling piston (14) and at least one air spring bellows (16), at least two damping devices (18, 20) being integrated in the air spring (10), which use compressed air, gas or a compressible medium as working medium, a first damping device (18) having a first chamber (22) which is variable in volume, a second chamber (24) which remains constant in volume, and a first damping channel device (26) which connects the two chambers (22, 24) to one another, the rolling piston (14) being of multipart design, the rolling piston (14) having a lower part (60), an upper part (62) having a rolling contour, and a cover element (64), the cover element (64) being connectable to the bottom part (60) and the upper part (54) such that all parts are fixed against one another, **characterized in that** the two damping devices (18, 20) are connected in parallel, **in that** a second damping device (20) has a third chamber (32) which is variable in volume, a fourth chamber (32) which is variable in volume, and a second damping channel device (36) interconnecting the two chambers (32, 34), and wherein the first chamber (22) and the third chamber (32) are interconnected to allow exchange of compressed air, gas or a compressible medium.

2. Air spring according to claim 1, **characterized in that** the first chamber (22) is delimited by the cover (12), the rolling piston (14) and the air spring bellows (16) and that the second chamber (24) is delimited by the rolling piston (14), wherein the first damping channel device (26) is incorporated in the rolling piston (14).

3. Air spring according to claim 2, **characterized in that** the second chamber (24) is delimited by an outer wall (28) and an inner wall (30) of the rolling piston (14).

4. Air spring according to one of the previous claims, **characterized in that** the third chamber (32) and the fourth chamber (34) are delimited by a cylindrical housing (38) formed in the rolling piston (14).

5. Air spring according to one of the previous claims, **characterized in that** the third chamber (32) and the fourth chamber (34) are separated from each other by a movable piston (40).

6. Air spring according to claim 4 or 5, **characterized in that** the second damping channel means (36) is formed between the piston (40) and the cylindrical housing (38) and/or that the second damping channel means (36) is incorporated in the piston (40).

7. Air spring according to claim 5 or 6, **characterized in that** the piston (40) is connected to a piston rod (42), the piston rod (42) being fixed to the cover (12).

8. Air spring according to any of the claims 5 to 7, **characterized in that** the piston (40) comprises a first buffer (54) limiting a movement of the piston (40).

9. Air spring according to one of the preceding claims, **characterized in that** the cover (12) has a second buffer (82) which limits a movement of the cover (12) and/or the rolling piston (14).

10. Air spring according to one of the preceding claims, **characterized in that** the rolling piston (14) has a connection device (98) for connecting a source of compressed air.

## Revendications

1. Ressort pneumatique (10) pour un véhicule automobile ou une cabine de conduite d'un véhicule automobile, comportant un couvercle (12), un piston de déroulement (14) et au moins un soufflet de ressort pneumatique (16), au moins deux dispositifs d'amortissement (18, 20) étant intégrés dans le ressort pneumatique (10), qui utilisent de l'air comprimé, du gaz ou un fluide compressible comme fluide de travail, dans lequel un premier dispositif d'amortissement (18) comprend une première chambre (22) dont le volume est variable, une deuxième chambre (24) dont le volume reste constant, et un premier dispositif de canal d'amortissement (26) qui relie les deux chambres (22, 24) entre elles, dans lequel le piston de déroulement (14) est réalisé en plusieurs parties, dans lequel le piston de déroulement (14) présente une partie inférieure (60) une partie supérieure (62) ayant un contour roulant et un élément de recouvrement (64), l'élément de recouvrement (64) pouvant être relié à la partie inférieure (60) et à la partie supérieure (54) de telle sorte que toutes les parties sont fixes les unes par rapport aux autres, **caractérisé en ce que** les deux dispositifs d'amortissement (18, 20) sont montés en parallèle, **en ce qu'**un deuxième dispositif d'amortissement (20) présente une troisième chambre (32) à volume variable, une quatrième chambre (32) à volume variable, et un deuxième dispositif de canal d'amortissement (36) reliant les deux chambres (32, 34), et dans lequel la première chambre (22) et la troisième chambre (32) sont interconnectées pour permettre l'échange d'air comprimé, de gaz ou d'un fluide compressible.

2. Ressort pneumatique selon la revendication 1, **caractérisé en ce que** la première chambre (22) est délimitée par le couvercle (12), le piston de déroulement (14) et le soufflet du ressort pneumatique (16) et **en ce que** la deuxième chambre (24) est délimitée par le piston de déroulement (14), dans lequel le premier dispositif de canal d'amortissement (26) est logé dans le piston de déroulement (14).

3. Ressort pneumatique selon la revendication 2, **caractérisé en ce que** la seconde chambre (24) est délimitée par une paroi extérieure (28) et une paroi intérieure (30) du piston de déroulement (14).

4. Ressort pneumatique selon l'une des revendications précédentes, **caractérisé en ce que** la troisième chambre (32) et la quatrième chambre (34) sont délimitées par un logement cylindrique (38) formé dans le piston de déroulement (14).

5. Ressort pneumatique selon l'une des revendications précédentes, **caractérisé en ce que** la troisième chambre (32) et la quatrième chambre (34) sont séparées l'une de l'autre par un piston mobile (40).

6. Ressort pneumatique selon la revendication 4 ou 5, **caractérisé en ce que** le second dispositif de canal d'amortissement (36) est formé entre le piston (40) et le logement cylindrique (38) et/ou **en ce que** le second dispositif de canal d'amortissement (36) est logé dans le piston (40).

7. Ressort pneumatique selon la revendication 5 ou 6, **caractérisé en ce que** le piston (40) est relié à une tige de piston (42), la tige de piston (42) étant fixée au couvercle (12).

8. Ressort pneumatique selon l'une quelconque des revendications 5 à 7, **caractérisé en ce que** le piston (40) comprend un premier amortisseur (54) limitant un mouvement du piston (40).

9. Ressort pneumatique selon l'une des revendications précédentes, **caractérisé en ce que** le couvercle (12) comporte un second amortisseur (82) limitant un mouvement du couvercle (12) et/ou du piston de déroulement (14).

10. Ressort pneumatique selon l'une des revendications précédentes, **caractérisé en ce que** le piston de déroulement (14) comporte un dispositif de raccordement (98) pour le raccordement d'une source d'air comprimé.
